# EUROPEAN PATENT APPLICATION

(11) **EP 2 634 036 A1**
(43) Date of publication of application: **04.09.2013**
(21) Application number: 11836320.9
(22) Date of filing: 26.10.2011
(51) Int. Cl.: B60N 2/16, B60N 2/44, B60N 2/50

(54) **VEHICLE SEAT DEVICE**

(30) Priority: 29.10.2010 JP 2010244559
(71) Applicant: Aisin Seiki Kabushiki Kaisha, Aichi 448-8650 (JP)
(72) Inventor: MAEDA, Toshiro, Kariya-shi Aichi 448-8650 (JP); KINO, Hiroki, Kariya-shi Aichi 448-8650 (JP)
(74) Representative: Winter, Brandl, Fürniss, Hübner, Röss, Kaiser, Polte - Partnerschaft
(86) International application number: PCT/JP2011/074638
(87) International publication number: WO 2012/057187

(57) **Abstract**

A vehicle seat device including a drive device, a control unit, and seating detection unit. The drive device is configured to move a seat cushion having a seat surface on which a vehicle occupant is seated in a vertical direction. The control unit controls the drive device. The seating detection unit detects a seating action of the vehicle occupant on the seat cushion. The control unit controls the drive device to move the seat cushion downward when the seating detection unit detects the seating action of the occupant.

## Description

### TECHNICAL FIELD

The present invention relates to a vehicle seat device.

### BACKGROUND ART

A vehicle seat device of the prior art includes a drive device (electric motor), which drives a seat cushion of a vehicle seat in a vertical direction, and a control unit, which controls the drive device based on an operation of a switch or the like. The vehicle seat deice as such can readily move the seat cushion in the vertical direction.

There is also a type of vehicle seat device that automatically moves a seat cushion in a vertical direction in cooperation with an exiting action of a vehicle occupant thereby improving the exiting property of a vehicle (for example, refer to Japanese Laid-Open Patent Publication No. 2009-241774).

### PRIOR ART DOCUMENT

### PATENT DOCUMENT

Patent Publication: Japanese Laid-Open Patent Publication No. 2009-0241774

### SUMMARY OF THE INVENTION

### PROBLEMS THAT ARE TO BE SOLVED BY THE INVENTION

The above-described vehicle seat device is moved in cooperation with an exiting action of a vehicle occupant but does not contribute to the entering property of the vehicle. The impact received by the vehicle occupant when being seated on a seat may make affect the vehicle entering property. The seat cushion may thus simply be softened in the vertical direction to increase the range of elastic deformation. However, this would, for example, enlarge the seat cushion in the vertical direction thereby causing other shortcomings, such as limited space.

It is an object of the present invention to provide a vehicle seat device that improves the vehicle entering property.

### MEANS FOR SOLVING THE PROBLEM

To achieve the above object, one aspect of the present invention is a vehicle seat device including a drive device, a control unit, and seating detection unit. The drive device is configured to move a seat cushion in a vertical direction. The seat cushion includes a seat surface on which a vehicle occupant is seated. The control unit controls the drive device. The seating detection unit detects a seating action of the vehicle occupant on the seat cushion. The control unit controls the drive device to move the seat cushion downward when the seating detection unit detects the seating action of the occupant.

### BRIEF DESCRIPTION OF THE DRAWINGS

Fig. 1 is a block diagram showing the electric configuration of a vehicle seat device according to one embodiment of the present invention;
Fig. 2 is a flowchart illustrating the processing performed by the ECU of Fig. 1; and
Fig. 3 is a time-impact chart that compares impacts.

### EMBODIMENTS OF THE INVENTION

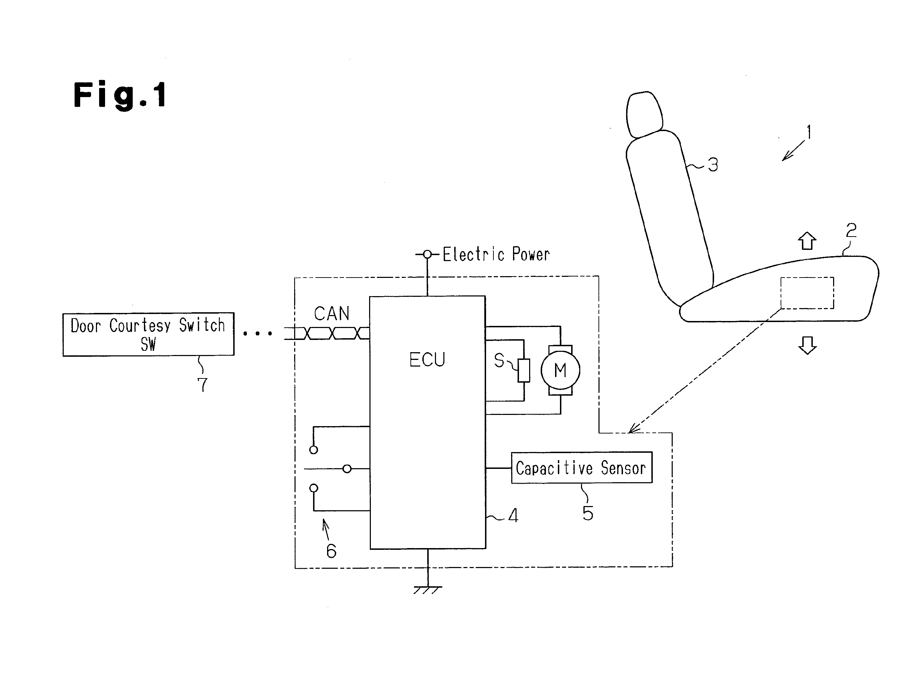

One embodiment of the present invention will now be described with reference to Figs. 1 to 3. As shown in Fig. 1, a vehicle seat 1 includes a seat cushion 2, which has a seating surface, and a seat back 3, which is supported in a reclinable manner at the rear end of the seat cushion 2.

Further, the vehicle seat 1 includes an electric motor M, which serves as a drive device that moves the seat cushion 2 in the vertical direction, an ECU 4, which serves as a control unit that controls the electric motor M, and a capacitive sensor 5, which is arranged proximal to the upper surface of the seat cushion 2. The capacitive sensor 5 serves as a seating detection unit having a capacitance that varies as a vehicle occupant (more specifically, the buttocks of the vehicle occupant) approaches. The electric motor M is a drive source of a so-called lifter mechanism that drives a mechanism (not shown) to move the seat cushion 2 in the vertical direction relative to the vehicle floor. Further, the electric motor M includes a rotation sensor S that detects the number of rotations produced by the electric motor M and, consequently, the position of the seat cushion 2 in the vertical direction. The vehicle seat 1 also includes an operation switch 6 for operating the electric motor M. The operation switch 6 is arranged in a state exposed from one side of the seat cushion 2. The capacitive sensor 5 detects a seating action of the vehicle occupant on the seat cushion 2. The capacitive sensor may detect the seating action of the vehicle occupant just before the vehicle occupant comes into contact with the seat cushion 2. In the present embodiment, the capacitive sensor 5 detects the seating action of the vehicle occupant when the distance between the approaching vehicle occupant and the seat cushion becomes, for example, 5 mm. Although not described in detail, the vehicle seat 1 also includes a reclining mechanism and the like.

The electric configuration of the vehicle seat device in the present embodiment will now be described.

The ECU 4 is electrically connected to the motor M, the rotation sensor S, the capacitive sensor 5, and the operation switch 6. Further, the ECU 4 is connected by an in-vehicle controller area network (CAN) to a door courtesy switch 7, which serves as a vehicle entering detection unit. The door courtesy switch 7 detects the opening of a vehicle door, in which the door courtesy switch 7 is arranged. This indicates that the vehicle occupant intends to enter the vehicle except when the vehicle occupant is seated on the vehicle seat 1 near the vehicle door including the door courtesy switch 7.

When the ECU 4 detects a seating action of the vehicle occupant with the capacitive sensor 5, the ECU 4 controls the electric motor M to move the seat cushion 2 downward.

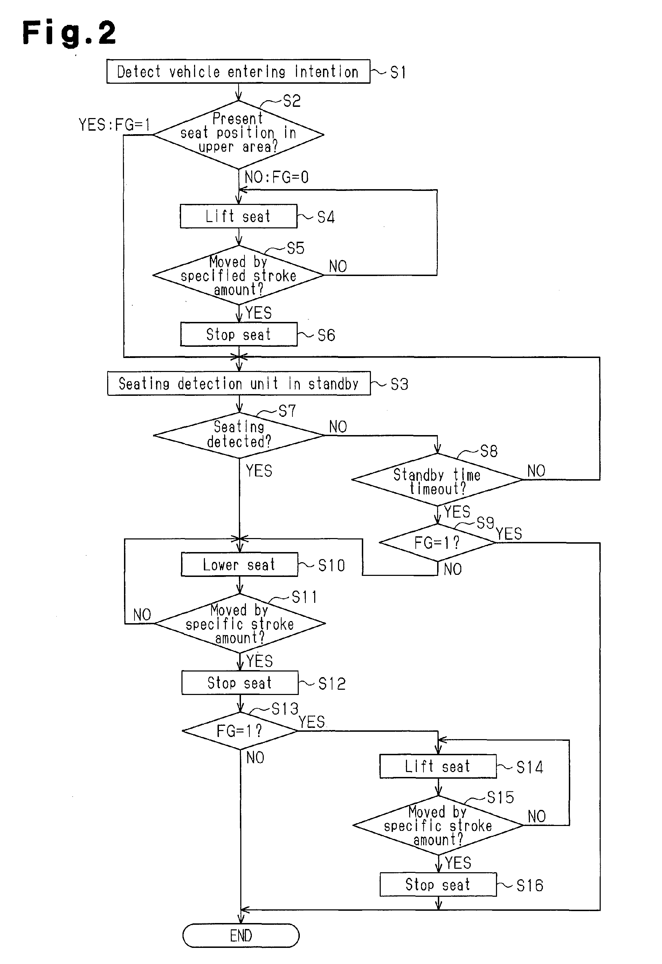

In detail, in step S1, when detecting a signal indicating the desire of the vehicle occupant to enter the vehicle from the door courtesy switch 7 via the in-vehicle CAN, the ECU 4 processes steps S2 to S16, which are shown in Fig. 2.

In step S2, the ECU 4 determines whether or not the seat cushion 2 (more specifically, the seating surface of the seat cushion 2) is presently located in a preset upper area of a vertical movable range of the seat cushion 2. The upper area is an area set to allow for downward movement of the seat cushion 2 by a specified stroke amount or greater. For example, when the vertical movable range is 40 mm and the specified stroke amount is 10 mm, the upper area is set from the position separated by 10 mm or greater from the lower end of the vertical movable range. The upper area is set by the area extending from the upper end of the vertical movable range to 15 mm from the upper end. The specified stroke amount is preset to the distance required to reduce the seating impact received by the vehicle occupant. The specified stroke amount is, for example, 10 mm.

In step S2, when it has been determined that the seat cushion 2 is in the upper area, the ECU 4 proceeds to step S3. In this case, the ECU 4 sets and stores a flag (FG=1) in a storage region. The flag is used in steps S9 and S13, as will be described later.

Further, in step S2, when it has been determined in step S2 that the seat cushion 2 is not in the upper area, the ECU 4 proceeds to step S4. In this case, the ECU 4 does not set the flag (FG=0) in the storage region.

In step S4, the ECU 4 controls an electric motor M to move the seat cushion 2 upward. That is, the ECU 4 starts supplying drive current to the electric motor M to move the seat cushion 2 upward.

Next, in step S5, the ECU 4 determines whether or not the seat cushion 2 has been moved upward by the specified stroke amount.

When having determined that the seat cushion 2 has not been moved upward by the specified stroke amount, the ECU 4 proceeds to step S4 and continues to supply the electric motor M with drive current until a determination is made that the seat cushion 2 has been moved upward by the specified stroke amount.

In step S5, when having determined that the seat cushion 2 has been moved upward by the specified stroke amount, the ECU 4 proceeds to step S6.

In step S6, the ECU 4 stops supplying drive current to the electric motor M to stop moving the seat cushion 2. Then, the ECU 4 proceeds to step S3.

In step S3, the ECU 4 activates the capacitive sensor 5 so that the capacitive sensor 5 enters a standby state in which the capacitive sensor 5 is in a state in which detection is enabled. Prior to step S3, the capacitive sensor 5 is deactivated, and the capacitive sensor 5 is in a state in which detection is disabled.

Next, in step S7, after determining that the capacitive sensor 5 has not detected the seating action of the vehicle occupant, the ECU 4 proceeds to step S8.

In step S8, the ECU 4 determines whether or not a preset and predetermined time (e.g., one minute) has elapsed (standby time timeout?) from when detection has been enabled (standby) in the capacitive sensor 5. After determining that the preset and predetermined time has not elapsed, the ECU 4 proceeds to step S3 and continues to determine whether or not a seating action has been detected. The predetermined time is set as a time required to proceed to a step that terminates processing under the assumption that the vehicle occupant does not intend to be seated when the vehicle door is opened but the vehicle occupant is not seated for a while.

In step S8, after determining that the preset and predetermined time has elapsed, the ECU 4 proceeds to step S9.

In step S9, the ECU 4 determines whether or not the flag is set (FG=1 or FG=0).

After determining that the flag is set (FG=1), that is, after determining in step S2 that the original position of the seat cushion 2 is in the upper area and that there is no history of the seat cushion 2 being moved upward in advance, the ECU 4 terminates processing.

After determining that the flag is not set (FG=0), that is, after having determined in step S2 that the original position of the seat cushion 2 is not in the upper area and thus there is a history of the seat cushion 2 being moved upward in advance, the ECU 4 proceeds to step S10 even though the capacitive sensor 5 has not detected the seating action of the vehicle occupant.

In step S7, after determining that the capacitive sensor 5 has detected a seating action of the vehicle occupant, the capacitive sensor 5 proceeds to step S10. More specifically, in the present embodiment, when the vehicle occupant attempts to be seated and the distance between the buttocks of the vehicle occupant and the seat cushion 2 becomes, for example, 5 mm, the capacitive sensor 5 detects the movement of the vehicle occupant just before the buttocks contact the seat cushion 2 as a seating action. Based on the detection, the ECU 4 proceeds to step S10.

In step S10, the ECU 4 controls the electric motor M to move the seat cushion 2 downward. That is, the ECU 4 starts supplying drive current to the electric motor M to move the seat cushion 2 downward.

In step S11, the ECU 4 determines whether or not the seat cushion 2 has been moved downward by the specific stroke amount.

After determining that the seat cushion 2 has not been moved downward by the specified stroke amount, the ECU 4 proceeds to step S10 and continues to supply the electric motor M with drive current until a determination is made that the seat cushion 2 has been moved downward by the specified stroke amount.

In step S11, after determining that the seat cushion 2 has been moved downward by the specific stroke amount, the ECU 4 proceeds to step S12.

In step S12, the ECU 4 stops supplying drive current to the electric motor M to stop moving the seat cushion 2. Then, the ECU 4 proceeds to step S13.

In step S13, the ECU 4 determines whether or not the flag is set (FG=1 or FG=0).

After determining that the flag has not been set (FG=0), that is, after determining in step S2 that the original position of the seat cushion 2 is not in the upper area and that there is no history of the seat cushion 2 being moved upward in advance, the ECU 4 terminates processing.

After the determining that the flag has been set (FG=1), that is, following the determination in step S2 that the original position of the seat cushion 2 is in the upper area and that there is no history of the seat cushion 2 being moved upward in advance, in other words, there is a history of downward movement from the original position, the ECU 4 proceeds to step S14.

In step S14, the ECU 4 controls the electric motor M to move the seat cushion 2 upward in the same manner as in step S4. Here, the ECU 4 starts supplying drive current to the electric motor M to move the seat cushion 2 upward.

In step S15, the ECU 4 determines whether or not the seat cushion 2 has been moved upward by the specified stroke amount in the same manner as in step S5.

After determining that the seat cushion 2 has not been moved upward by the specified stroke amount, the ECU 4 proceeds to step S14 and continues to supply the electric motor M with drive current until a determination is made that the seat cushion 2 has been moved upward by the specified stroke amount.

In step S15, following a determination that the seat cushion 2 has been moved upward by the specified stroke amount, the ECU 4 proceeds to step S16.

In step S16, the ECU 4 stops supplying drive current to the electric motor M to stop moving the seat cushion 2 in the same manner as step S6. Then, the ECU 4 terminates processing.

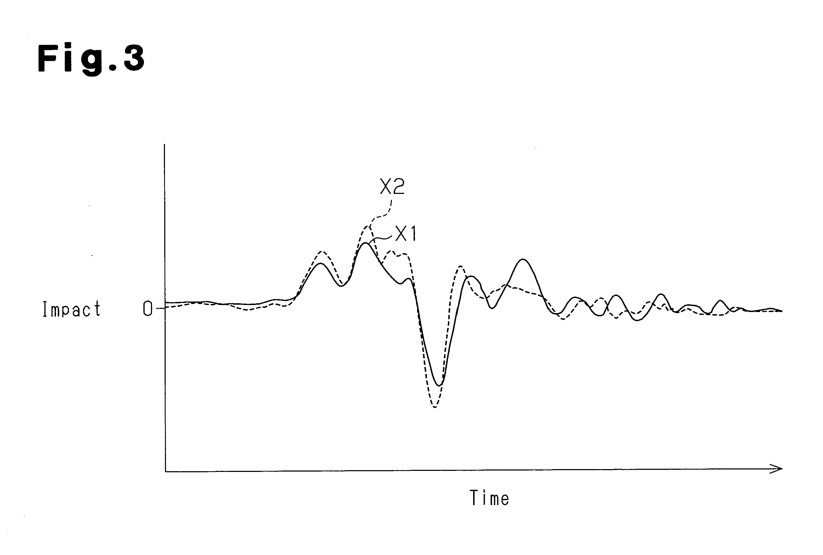

The advantages of the above embodiment will now be described.
(1) When the capacitive sensor 5 detects a seating action of the vehicle occupant on the seat cushion 2, the ECU 4 controls the electric motor M to move the seat cushion 2 downward. This allows the seating impact received by the vehicle occupant to be reduced (absorbed). Fig. 3 shows a characteristic X1, which is the impact measured when the vehicle occupant is seated on the seat device of the present embodiment that moves the seat cushion 2 downward when a seating action is detected, and a characteristic X2, which is the impact measured when the vehicle occupant is seated on the seat device of the prior art that uses the unmoved seat cushion 2. As apparent from Fig. 3, the characteristic X1 of the present embodiment has a smaller maximum value than the characteristic X2 of the prior art. Thus, the vehicle entering property can be improved. In the present embodiment, the so-called lifter mechanism including the electric motor M is used in a conventional vehicle seat. Thus, the device (mechanism) does not become complicated and is not enlarged.
(2) After the vehicle entering detection unit detects the vehicle entering intention, the ECU 4 enables detection with the capacitive sensor 5. Thus, when the vehicle entering intention is not detected, detection with the capacitive sensor 5 is disabled (state in which power is deactivated). This easily lowers power consumption.
(3) When the vehicle entering detection unit detects the vehicle entering intention, the ECU 4 determines whether or not the seat cushion 2 is located in the preset upper area of the vertical movable range of the seat cushion 2. When the ECU 4 has determined that the seat cushion 2 is not located in the upper area, the ECU 4 controls the electric motor M to move the seat cushion 2 upward. This ensures that the seat cushion is moved downward by the desired specified stroke amount required to reduce the impact thereby allowing for satisfactory reduction of the impact. More specifically, when the seat cushion 2 is not located in the upper area, the stroke amount for moving the seat cushion 2 downward may be less than the desired specified stroke amount. However, such a situation may be avoided. Obviously, when the seat cushion 2 is located in the upper area, downward movement of the seat cushion 2 by the desired specified stroke amount may be ensured without moving the seat cushion 2 further upward. Thus, when the ECU 4 has determined that the seat cushion 2 is located in the upper area, the ECU 4 waits without moving the seat cushion 2 until a seating action of the vehicle occupant is detected. This allows for satisfactory reduction in the seating impact received by the vehicle occupant regardless of where the seat cushion 2 is originally located.
(4) After determining that the seat cushion 2 is not located in the upper area and moving the seat cushion 2 upward, the ECU 4 controls the electric motor M to move the seat cushion 2 upward by the specified stroke amount by which the seat cushion 2 is moved downward (step S4 to S6). Thus, there is no need to move the seat cushion 2 upward to return the seat cushion 2 to its original position after the vehicle occupant is seated. Since the seat cushion 2 is not moved in the vertical position to return to its original position after the vehicle occupant is seated, the vehicle occupant would not feel awkward.
(5) After determining that the seat cushion 2 is located in the upper area, after moving the seat cushion 2 downward based on a detection of a seating action from that position, the ECU 4 controls the electric motor M to move the seat cushion 2 upward by the specified stroke amount by which the seat cushion 2 is moved downward (step S14 to S16). Thus, there is no need for the vehicle occupant to perform a further operation to return the seat cushion 2 to its original position.
(6) The vehicle entering detection unit is the door courtesy switch 7 that detects that the vehicle entering intention when the vehicle door opens. The door courtesy switch 7 is often used in vehicles. Thus, by using (sharing) the door courtesy switch 7, the vehicle entering intention may be automatically detected merely through an action that is always performed before entering the vehicle.
(7) The seating detection unit is the capacitive sensor 5. This allows the seating action of the vehicle occupant just before the vehicle occupant comes into contact with the seat cushion 2 to be detected and the electric motor M to be controlled to easily move the seat cushion 2 in a timely manner, that is, at a timing that obtains characteristic X1, which is shown in Fig. 3.

The above embodiment may be modified as described below.

In the above embodiment, the ECU 4 sets the seating detection unit in a detection enabling state after the vehicle entering detection unit detects the vehicle entering intention. The present invention is not limited in such a manner. For example, the seating detection may constantly be in a detection enabling state.

In the above embodiment, when the ECU 4 detects the vehicle entering intention with the vehicle entering detection unit, the ECU 4 determines whether or not the seat cushion 2 is located in the upper area of the vertical movable range and moves the seat cushion 2 upward when having determined that the seat cushion 2 is not in the upper area. However, the present invention is not limited in such a manner, and the determination of whether or not the seat cushion 2 is located in the upper area may be omitted. Although the stroke amount by which the seat cushion 2 is moved downward may be less than the desired specified stroke amount, when the stroke amount by which the seat cushion 2 is moved downward is not less than the desired specified stroke amount, the seating impact received by the vehicle occupant may be reduced in a satisfactory manner. Further, steps S2, S4, S5, S6, S9, and S13 would be omitted and thereby simplify the control in comparison to the above embodiment.

In the above embodiment, when having determined that the seat cushion 2 is not located in the upper area and moving the seat cushion 2 upward, the ECU 4 moves the seat cushion upward by the specified stroke amount by which the seat cushion 2 is moved downward. However, the present invention is not limited in such a manner, and the seat cushion 2 may be moved by another length, for example, to a preset reference position. In this case, it is preferred that the seat cushion 2 be returned to its original position after the vehicle occupant is seated. However, the seat cushion 2 does not have to return to its original position.

In the above embodiment, after moving the seat cushion 2 downward based on a detection of a seating action from a position where the seat cushion 2 is determined as being in the upper area, the ECU 4 moves the seat cushion 2 upward by the stroke amount in which the seat cushion 2 is moved downward so that the seat cushion 2 returns to its original position. The present invention is not limited in such a manner, and the seat cushion 2 does not have to be returned to its original position.

In the above embodiment, the vehicle entering detection unit is the door courtesy switch 7 that detects the vehicle entering intention when the vehicle door opens. The present invention is not limited in such a manner, and the vehicle entering detection unit may be changed to another configuration as long as the vehicle entering intention may be detected. For example, the vehicle entering detection unit may be a receiver that detects the vehicle entering intention when an unlock signal is received from a radio wave key.

In the above embodiment, the seating detection unit is the capacitive sensor 5. However, the present invention is not limited in such a manner, and the seating detection unit may be changed to another configuration as long as the seating action of the vehicle occupant on the seat cushion 2 can be detected. For example, the seating detection unit may be changed to a membrane switch, an optical sensor, or the like.

In the above embodiment, after having determined that the seat cushion 2 is not located in the upper area and having moved the seat cushion 2 upward, when a preset predetermined time elapses from when the capacitive sensor 5 is set to the detection enabling state, the ECU 4 returns the seat cushion 2 to its original position even when the seating action of the vehicle occupant is not detected. The present invention is not limited in such a manner, and the seat cushion 2 may be left at the same position. In this case, for example, preferably, the information of the position is stored in a storage region, and when the vehicle entering intention is detected again, a drive device is controlled to ultimately return the seat cushion 2 to its original position.

The numerical values in the above embodiment may be changed as long as the impact received by the vehicle occupant when being seated may be reduced. For example, in the above embodiment, the specified stroke amount by which the seat cushion 2 is moved downward when detecting the seating action of the vehicle occupant is 10 mm. However, the specified stroke amount may be changed to another numerical value such as 5 mm as long as the impact can be reduced. Further, in the above embodiment, the capacitive sensor 5 detects the seating action of the vehicle occupant when the distance between the vehicle occupant and the seat cushion 2 becomes 5 mm. However, this may be changed to another numerical value such as 10 mm.

### DESCRIPTION OF THE REFERENCE CHARACTERS

1: vehicle seat
2: seat cushion
4: ECU (control unit)
5: capacitive sensor (seating detection unit)
7: door courtesy switch (vehicle entering detection unit)
M: electric motor (drive device)

## Claims

1. A vehicle seat device comprising:
a drive device configured to move a seat cushion in a vertical direction, wherein the seat cushion includes a seat surface on which a vehicle occupant is seated;
a control unit that controls the drive device;
a seating detection unit that detects a seating action of the vehicle occupant on the seat cushion,
wherein the control unit controls the drive device to move the seat cushion downward when the seating detection unit detects the seating action of the occupant.

2. The vehicle seat device according to claim 1, further comprising a vehicle entering detection unit that detects a vehicle entering intention of the vehicle occupant,
wherein the control unit sets the seating detection unit in a detection enabling state after the vehicle entering detection unit detects the vehicle entering intention of the vehicle occupant.

3. The vehicle seat device according to claim 2, wherein
the seat cushion is movable in the vertical direction within a predetermined movable range; and
when the vehicle entering detection unit detects the vehicle entering intention, the control unit determines, before moving the seat cushion downward, whether or not the seat cushion is located in a preset upper area in the movable range, the control unit controls the drive device to move the seat cushion upward when having determined that the seat cushion is not in the upper area, and the control unit waits as it is until detecting the seating action of the vehicle occupant when having determined that the seat cushion is in the upper area.

4. The vehicle seat device according to claim 3, wherein
the control unit is configured to move the seat cushion downward by a specified stroke amount based on a detection of the seating action; and
the control unit controls the drive device to move the seat cushion upward by the specified stroke amount when having determined that the seat cushion is not in the upper area and moving the seat cushion upward.

5. The vehicle seat device according to claim 3, wherein the control unit controls the drive device to move the seat cushion downward by a specified stroke amount based on a detection of the seating action when having determined that the seat cushion is in the upper area and then move the seat cushion upward by the specified stroke amount.

6. The vehicle seat device according to claim 4 or 5, wherein the specified stroke amount is preset to a distance required to reduce a seating impact received by the vehicle occupant.

7. The vehicle seat device according to any one of claims 2 to 6, wherein the vehicle entering detection unit includes a door courtesy switch.

8. The vehicle seat device according to any one of claims 1 to 7, wherein the seating detection unit includes a capacitive sensor.
